# EUROPEAN PATENT SPECIFICATION

(11) **EP 2 733 909 B1**
(45) Date of publication and mention of the grant of the patent: **12.12.2018**
(21) Application number: 12878650.6
(22) Date of filing: 29.08.2012
(51) Int. Cl.: G06F 9/48, H04L 29/06, H04L 29/08, H04W 4/00

(54) **TERMINAL CONTROL METHOD AND DEVICE, AND TERMINAL**
STEUERVERFAHREN UND VORRICHTUNG FÜR EIN ENDGERÄT UND ENDGERÄT
PROCÉDÉ ET DISPOSITIF DE COMMANDE DE TERMINAL ET TERMINAL

(43) Date of publication of application: 21.05.2014
(73) Proprietor: Huawei Device Co., Ltd., Shenzhen, Guangdong 518129 (CN)
(72) Inventor: FAN, Cunzhi, Shenzhen, Guangdong 518129 (CN); ZHANG, Feilong, Shenzhen, Guangdong 518129 (CN); ZHANG, Ling, Shenzhen, Guangdong 518129 (CN); FAN, Qiang, Shenzhen, Guangdong 518129 (CN)
(74) Representative: Thun, Clemens
(86) International application number: PCT/CN2012/080723
(87) International publication number: WO 2014/032241

(56) References cited:
- CN-A- 101 340 449
- CN-A- 101 873 640
- CN-A- 102 204 210
- CN-A- 102 404 821
- US-A1- 2004 166 878
- US-A1- 2005 130 633
- US-A1- 2007 156 670
- US-A1- 2008 316 983
- US-A1- 2008 316 983
- US-A1- 2010 121 954
- US-A1- 2010 217 852

## Description

### TECHNICAL FIELD

The present invention relates to communications technologies, and in particular, to a method and an apparatus for controlling a terminal, and a terminal.

### BACKGROUND

With rapid development of mobile terminals and wireless networks, a progress of mobile office applications is accelerating and many enterprises gradually use a mobile office to make work much easier and more efficient. However, a problem of the mobile office is that an enterprise cannot effectively manage or control each mobile terminal in the mobile office, and the following situation may occur: A user of a mobile terminal may use an entertainment application, such as chatting, playing a game, or listening to a song, during working time, thereby affecting office efficiency. Currently, use time of some applications on a terminal cannot be controlled and therefore work is affected.
Document US 2008/0316983 A1 discloses a communication terminal that communicates a network access request that may include an identifier for the communication terminal, such as a MAC address thereof, a user identifier, and/or an application identifier to the bandwidth enforcement controller 226 and to the services enforcement controller 228. The bandwidth enforcement controller 226 and/or the services enforcement controller 228 query the repository 222 using the received terminal identifier, application identifier, and/or user identifier to obtain services information allocated thereto, which may define a maximum communication bandwidth and/or identify network services that may be allowed or denied. The bandwidth enforcement controller 226 constrains communications between the LAN access point 140 in the communication terminal to no more than the maximum communication bandwidth defined by the service information in the repository 222. The services enforcement controller 228 selectively grants/denies access to one or more network services defined by the service information to the communication terminal.
Document US 2005/0130633 A1 discloses a method for controlling usage of a mobile terminal. A usage specification including an identification of allowed numbers, an identification of restricted numbers, a usage time limitation, an expiration value and/or a specification of enabled services of the mobile terminal that are restricted is received. Usage of the mobile terminal is limited based on the received usage specification responsive to receipt of a valid authorization code. The authorization code and/or the usage specification may be received from a keypad and/or input screen of the mobile terminal. Alternatively, the authorization code and/or the usage specification are received from a remote user over a wireless communication connection.
Document US 2007/156670 A1 discloses a method of managing information including providing rules and abstractions, where a rule has an expression having a variable, and the variable is defined in a first abstraction. A subset of the rules and abstractions relevant to a target is determined. The subset of rules and abstractions is modified. The modified subset of rules and abstractions are logically equivalent to the subset of rules and abstractions. The modified subset of rules and abstractions is associated to the target. For the target, access to the information of the system will be controlled based on the modified subset of rules and abstractions.

### SUMMARY

Embodiments of the present invention provide a method and an apparatus for controlling a terminal, and a terminal, so as to control use time of an application on a terminal.

In a first aspect of the present invention, a method for controlling used in a terminal is provided. The method includes:
sending, by a terminal, a terminal identity of the terminal to an apparatus for controlling a terminal;
sending, by the terminal, an application start request for requesting start of an application to the apparatus for controlling a terminal, wherein the application is an application currently in a locally disabled state; and
receiving, by the terminal, a start command that is returned by the apparatus for controlling a terminal and used to indicate the start of the application, and setting the application to the available state according to the start command;
receiving, by the terminal, time control information that is sent by the apparatus for controlling a terminal and corresponds to the application identity of the application on the terminal, where the time control information is acquired by the apparatus for controlling a terminal according to the terminal identity; and
controlling, by the terminal according to the time control information and local time, use time of the application that corresponds to the application identity;
setting different screen display states according to the state of the application;
wherein the method further comprises:
   setting different types of applications on different screens according to the states of the applications.

In a possible implementation manner, the receiving, by the terminal, time control information that is sent by the apparatus for controlling a terminal and corresponds to an application identity of an application on the terminal includes: receiving, by the terminal, the time control information that is sent by the apparatus for controlling a terminal, where the time control information includes use time information of an application on the terminal; and the controlling, by the terminal according to the use time information of the application and local time, use time of the application includes: setting the application to an available state if the local time is within an application-available time range limited by the use time information, or otherwise setting the application to a disabled state.

In another possible implementation manner, before the controlling, according to the use time information of the application and local time, use time of the application, the method further includes: performing time synchronization with a time synchronization server so as to acquire the local time.

In still another possible implementation manner, the received time control information further includes: access time information of data to be accessed by the application; and after the receiving time control information that is sent by the apparatus for controlling a terminal, the method further includes: controlling, according to use time information of the application, the access time information of the data, and the local time, the use time of the application, which includes: setting the application to the available state if the local time is both within the application-available time range limited by the use time information of the application and within a data-available time range limited by the access time information of the data, or otherwise setting the application to the disabled state.

In still another possible implementation manner, after the receiving time control information that is sent by the apparatus for controlling a terminal, the method further includes: receiving address access limit information that is sent by the apparatus for controlling a terminal and corresponds to the application, and controlling an access address according to the address access limit information when the application is being used.

In still another possible implementation manner, the setting different screen display states according to states of applications further comprises: when the application is in the available state, a screen corresponding to the application is set to a high-luminance color; or when the application is in the disabled state, a screen corresponding to the application is set to gray.

In still another aspect of the present invention, an apparatus for controlling a terminal is provided. The apparatus includes:
a terminal identity receiving unit, configured to receive a terminal identity sent by a terminal;
an application time acquiring unit, configured to acquire, according to the terminal identity, time control information that corresponds to an application identity of an application on the terminal;
an application time sending unit, configured to send the time control information to the terminal, so that the terminal controls use time of the application that corresponds to the application identity according to the time control information; and
a special command processing unit, configured to receive an application start request sent by the terminal for requesting start of the application, wherein the application is an application currently in a disabled state on the terminal; and send a start command used to indicate the start of the application to the terminal according to the application start request, so that the terminal sets the application to an available state according to the start command, wherein different screen display states are set according to the state of the application;
wherein different types of applications are set on different screens according to the states of the applications, and the screen is configured to display different screens according to the states of the applications.

In a possible implementation manner, the application time acquiring unit is specifically configured to acquire, according to the terminal identity, an application identity that corresponds to the terminal identity, where the application identity is an application identity of an application on the terminal; and acquire, according to the application identity, the time control information that corresponds to the application identity.

In another possible implementation manner, the time control information includes use time information of the application, so that the terminal controls the use time of the application according to the use time information.

In still another possible implementation manner, the time control information further includes access time information of data to be accessed by the application, so that the terminal controls, according to the use time information of the application and the access time information of the data, the use time of the application.

In still another possible implementation manner, the terminal identity receiving unit is specifically configured to receive an application registration request sent by the terminal, where the application registration request carries an application identity of an application on the terminal and the terminal identity; and the apparatus further includes: a control information setting unit, configured to store correspondence between the application identity and the terminal identity, and set the time control information that corresponds to the application identity, so that the application time acquiring unit of the terminal acquires the time control information according to the terminal identity.

In still another possible implementation manner, the control information setting unit is further configured to review the application that corresponds to the application identity received by the terminal identity receiving unit, and if the application is a remote desktop application or a cloud application, no longer set the time control information of the application.

In still another possible implementation manner, the apparatus further includes: an access address controlling unit, configured to acquire address access limit information that corresponds to the application identity, and control an access address of the application according to the address access limit information.

In still another aspect of the present invention, a terminal is provided. The terminal includes:
a terminal identity sending unit, configured to send a terminal identity of the terminal to an apparatus for controlling a terminal, so that the apparatus for controlling a terminal acquires, according to the terminal identity, time control information that corresponds to an application identity of an application on the terminal;
an application time receiving unit, configured to receive the time control information sent by the apparatus for controlling a terminal; and
an application time controlling unit, configured to control, according to the time control information and local time, use time of the application that corresponds to the application identity;
wherein the terminal is configured to send an- application start request to the apparatus for requesting start of the application, wherein the application is an application currently in a disabled state on the terminal; and receive a start command used to indicate the start of the application from the apparatus, and set the application to an available state according to the start command, wherein the terminal further comprises a screen, the screen is configured to display different screen display states according to the state of the application;
wherein different types of applications are set on different screens according to the states of the applications, and the screen is configured to display different screens according to the states of the applications.

In a first possible implementation manner, the time control information includes use time information of the application on the terminal; and the application time controlling unit is specifically configured to control, according to the use time information of the application and the local time, the use time of the application, including: setting the application to an available state if the local time is within an application-available time range limited by the use time information, or otherwise setting the application to a disabled state.

In another possible implementation manner; the terminal further includes: a time synchronizing unit, configured to perform time synchronization with a time synchronization server so as to acquire the local time.

In still another possible implementation manner, the time control information received by the application time receiving unit further includes: access time information of data to be accessed by the application; and the application management subunit is specifically configured to control, according to use time information of the application, the access time information of the data, and the local time, the use time of the application, including: setting the application to the available state if the local time is both within the application-available time range limited by the use time information of the application and within a data-available time range limited by the access time information of the data, or otherwise setting the application to the disabled state.

In still another possible implementation manner, the terminal further includes: an access address controlling unit, configured to receive address access limit information that is sent by the apparatus for controlling a terminal and corresponds to an application, and control an access address according to the address access limit information when the application is being used.

In still another possible implementation manner, the screen is configured to display a screen corresponding to the application that is set to a high-luminance color when the application is in the available state; or the screen is configured to display a screen corresponding to the application that is set to gray when the application is in the disabled state.

A technical effect of the method and the apparatus for controlling a terminal and the terminal according to the embodiments of the present invention is as follows: The apparatus for controlling a terminal acquires time control information according to a terminal identity, where the time control information is time control information that corresponds to an application identity of an application on the terminal, so that use time of the application on the terminal may be controlled according to the time control information.

### BRIEF DESCRIPTION OF DRAWINGS

FIG. 1 is a diagram of a system architecture to which a method for controlling a terminal according to an embodiment of the present invention is applied;
FIG. 2 is a schematic flowchart of a method for controlling a terminal according to an embodiment of the present invention;
FIG. 3 is a schematic flowchart of a method for controlling a terminal according to another embodiment of the present invention;
FIG. 4 is a schematic signaling diagram of a method for controlling a terminal according to still another embodiment of the present invention;
FIG. 5 is a schematic diagram 1 of screen settings of a mobile office device in a method for controlling a terminal according to still another embodiment of the present invention;
FIG. 6 is a schematic diagram 2 of screen settings of a mobile office device in a method for controlling a terminal according to still another embodiment of the present invention;
FIG. 7 is a schematic diagram of relationships between devices in a method for controlling a terminal according to still another embodiment of the present invention;
FIG. 8 is a schematic signaling diagram of a method for controlling a terminal according to still another embodiment of the present invention;
FIG. 9 is a schematic structural diagram of an apparatus for controlling a terminal according to an embodiment of the present invention;
FIG. 10 is a schematic structural diagram of an apparatus for controlling a terminal according to another embodiment of the present invention;
FIG. 11 is a schematic structural diagram of a terminal according to an embodiment of the present invention;
FIG. 12 is a schematic structural diagram of a terminal according to another embodiment of the present invention;
FIG. 13 is an entity structure diagram of an apparatus for controlling a terminal according to an embodiment of the present invention; and
FIG. 14 is an entity structure diagram of a terminal according to an embodiment of the present invention.

### DESCRIPTION OF EMBODIMENTS

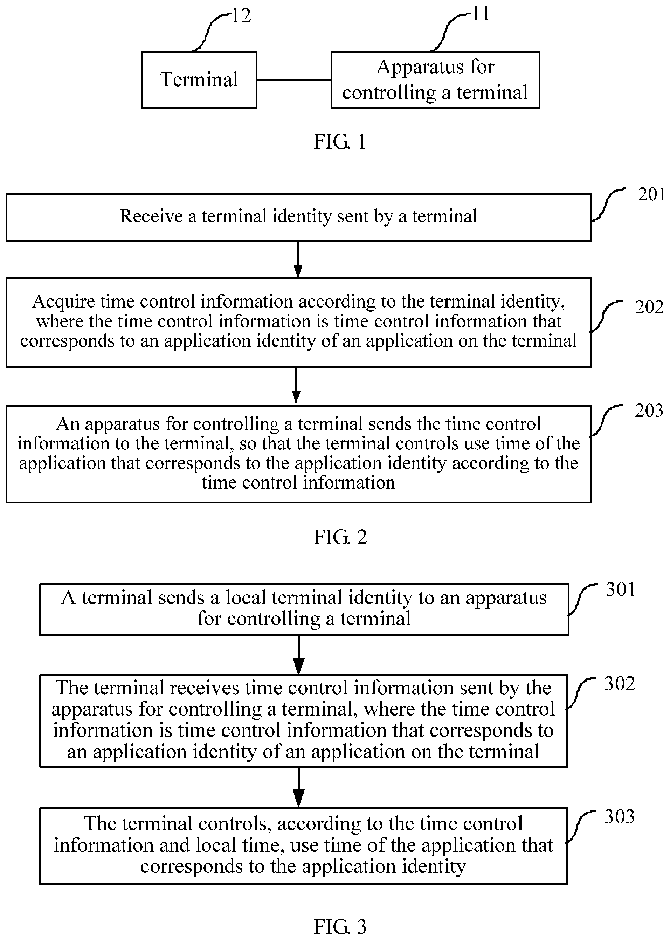

A method for controlling a terminal according to an embodiment of the present invention is applied between an apparatus for controlling a terminal and a terminal. FIG. 1 is a diagram of a system architecture to which a method for controlling a terminal according to an embodiment of the present invention is applied. As shown in FIG. 1, that an apparatus for controlling a terminal controls a terminal according to an embodiment of the present invention is to control use time of an application on the terminal. An apparatus 11 for controlling a terminal may acquire time control information that corresponds to an application on a terminal 12, and control use time of the application on the terminal 12 according to the time control information. A specific application scenario may be as follows: In an enterprise, an apparatus 11 for controlling a terminal controls each terminal 12 in a mobile office, and controls use time of each application such as an office application or an entertainment application on the terminal 12, so as to prevent an employee from having entertainment during working time and perform work supervision; or, at home, an apparatus 11 (such as a home gateway) for controlling a terminal controls use time of a specific application on a terminal 12, for example, confines use time of an application "Game" on a tablet computer to be within 7:00-9:00 so as to prevent a child from having excessive entertainment that would affect study.

It should be specially noted that among the time control information that corresponds to an application on the terminal, the application uses an application identity (that is, APP ID) to distinguish itself from another different application. For example, APP ID1 corresponds to time control information 1, and APP ID2 corresponds to time control information 2. Here, the APP ID is information that can uniquely identify a certain application, and does not relate to a terminal on which the application resides. An example is as follows: For example, a certain application is installed on both a mobile phone and a PAD, except that a version number in the mobile phone is different from a version number in the PAD, or the application on the mobile phone is functionally different from the application on the PAD because the application is specifically changed so as to adapt to some specific functions of the terminal as necessary; however, although the preceding differences exist between the application on the mobile phone and the application on the PAD, they still belong to a same application and have a same APP ID. Assuming that the application on the mobile phone is called a first application and the application on the PAD is called a second application, the first application and the second application have the same APP ID.

In the following embodiments, for time control information that corresponds to an application or some information that corresponds to the application, the application is identified by an APP ID in both cases. The following describes in detail a method for controlling a terminal according to an embodiment of the present invention.

### Embodiment 1

FIG. 2 is a schematic flowchart of a method for controlling a terminal according to an embodiment of the present invention. The method according to this embodiment is executed by an apparatus for controlling a terminal. As shown in FIG. 2, the method may include the following steps:
201. Receive a terminal identity sent by a terminal.

The apparatus for controlling a terminal receives the terminal identity of the terminal. For example, when the terminal is connected to the apparatus for controlling a terminal at a first time, the terminal may send its own terminal identity to the apparatus for controlling a terminal; or when use time of the terminal needs to be controlled at certain time after the terminal is connected to the apparatus for controlling a terminal, the terminal sends its own terminal identity to the apparatus for controlling a terminal.

The terminal identity is information that can uniquely identify the terminal. For example, for a tablet computer, a serial number of a central processing unit (Central Processing Unit, CPU for short) of the tablet computer may be used as a terminal identity of the tablet computer.

202. Acquire time control information according to the terminal identity, where the time control information is time control information that corresponds to an application identity of an application on the terminal.

For example, the apparatus for controlling a terminal may acquire, according to the received terminal identity, an application identity that corresponds to the terminal identity, where the application identity is an application identity of an application on the terminal. For example, an application A and an application B are installed on the terminal, and the terminal has registered the two applications into the apparatus for controlling a terminal. Then the apparatus for controlling a terminal may actually store correspondence between the terminal and an application installed on the terminal. For example, "Terminal a-Application A and Application B" may be recorded. Certainly, the recorded correspondence is correspondence between the terminal identity and application identities. In this case, after receiving the terminal identity in this step, the apparatus for controlling a terminal may acquire an application identity that corresponds to the terminal identity.

Next, the apparatus for controlling a terminal may acquire time control information that corresponds to the application identity, where the time control information is used to limit use time of an application that corresponds to the application identity. For example, the application A is limited to use in a time period of 8:00-12:00. The time control information may have been set by the apparatus for controlling a terminal when the terminal previously registered the application; or the apparatus for controlling a terminal may update the time control information of the application at any time according to a practical requirement.

For example, in a mobile office, use time of an application on a terminal needs to be controlled. For example, the time control information may be use time information of the application, and the use time herein is time when the application is in an available state, that is, time when the application is allowed to be started. For example, an office application "Email" may be limited to being in the available state in a working time period of 8:00-17:00 by using time control information of the "Email", and an employee can start the office application; whereas an entertainment application "Game" may be limited to being in the available state during non-working time after 17:00 by using time control information of the "Game". In this way, the apparatus for controlling a terminal is capable of controlling use time of each application on the terminal.

203. The apparatus for controlling a terminal sends the time control information to the terminal, so that the terminal controls, according to the time control information, use time of the application that corresponds to the application identity.

The apparatus for controlling a terminal sends the time control information to the terminal, so that the terminal can control the use time of the terminal according to the time control information.

The preceding description is exemplary only. The specific process of executing the method for controlling a terminal is described in detail in subsequent embodiments in combination with specific application scenarios. Time control information of an application is set, and an apparatus for controlling a terminal controls use time of the application on a terminal according to the time control information. In this way, capability to control and manage a terminal is strengthened, and delicacy management of the terminal is implemented, thereby achieving service-level (that is, application-level) control and management capability.

### Embodiment 2

FIG. 3 is a schematic flowchart of a method for controlling a terminal according to another embodiment of the present invention. The method according to this embodiment is executed by a terminal. As shown in FIG. 3, the method may include the following steps:
301. The terminal sends a local terminal identity to an apparatus for controlling a terminal.

For example, the terminal may send its own terminal identity to the apparatus for controlling a terminal when the terminal is connected to the apparatus for controlling a terminal. For example, a tablet computer may report a serial number of its own CPU as its own terminal identity.

302. The terminal receives time control information sent by the apparatus for controlling a terminal, where the time control information is time control information that corresponds to an application identity of an application on the terminal, and the time control information is acquired by the apparatus for controlling a terminal according to the terminal identity.

After receiving the terminal identity, the apparatus for controlling a terminal acquires time control information of an application identity that corresponds to the terminal identity and sends the time control information to the terminal.

303. The terminal controls, according to the time control information and local time, use time of the application that corresponds to the application identity.

After receiving the time control information sent by the apparatus for controlling a terminal, the terminal controls, according to the time control information and local time on a terminal side, use time of the application on the terminal. For example, if the time control information of the application indicates that the use time of the application is 8:00-12:00, the terminal determines the local time that is current time of the terminal, such as 9:00, and then combines the time control information 8:00-12:00 to determine whether to set the application to a state available for normal use.

The following describes in detail the method for controlling a terminal according to the embodiment of the present invention in combination with specific application scenarios and mostly by taking a mobile office scenario as an example. However, specific implementation is not limited to this, and all other similar scenarios where use time of an application on a terminal needs to be controlled are applicable.

### Embodiment 3

In this embodiment, a mobile office scenario is used as an example. A terminal in this scenario may be a mobile office device such as a smart mobile phone or a tablet computer in an enterprise; the enterprise may control use time of each mobile office device by using an apparatus for controlling a terminal; and in such a mobile office scenario, the enterprise mostly limits use time of an application on a mobile office device.

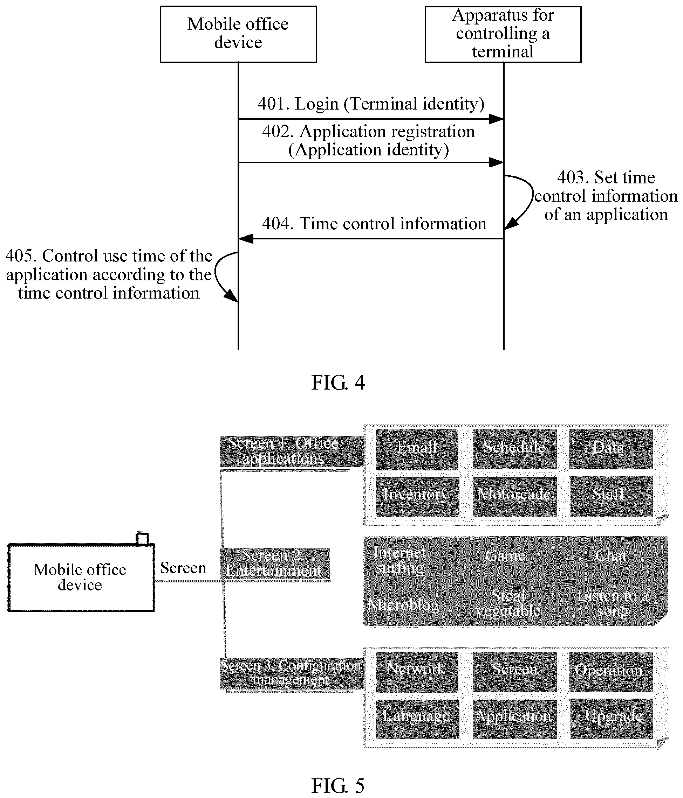

FIG. 4 is a schematic signaling diagram of a method for controlling a terminal according to still another embodiment of the present invention. As shown in FIG. 4, the method may include the following steps:
401. A mobile office device sends a login request to the apparatus for controlling a terminal, where the login request carries a terminal identity of the mobile office device.

When starting to work upon power-on, each mobile office device in the enterprise needs to log in to the apparatus for controlling a terminal in the enterprise and carry a terminal identity of the mobile office device, such as a serial number of a CPU of the device.

The enterprise registers in advance a terminal identity of each mobile office device in the enterprise into the apparatus for controlling a terminal; and when a mobile office device is logging in, queries according to a terminal identity reported by the mobile office device, whether the terminal identity is stored in the apparatus for controlling a terminal. If the terminal identity is stored, it indicates that the mobile office device is an authorized user of the enterprise; otherwise, the login of the device may be denied. If the mobile office device cannot log in to the apparatus for controlling a terminal, the mobile office device cannot use server information provided by the apparatus for controlling a terminal and about an enterprise network to be accessed by each application and cannot access the enterprise network, thereby ensuring security of the enterprise network.

402. The mobile office device sends an application registration request to the apparatus for controlling a terminal, carrying an application identity of an application on the mobile office device and the terminal identity.

All applications installed on the mobile office device need to get registered into the apparatus for controlling a terminal. In specific implementation, the mobile office device may set an application management subunit in the mobile office device itself to record a state indicating whether each application has been reported. If an application has been reported, "Reported" is recorded. If the application is not yet reported, "Unreported" is recorded. In this way, the mobile office device can send an application registration request to the apparatus for controlling a terminal, so as to notify the apparatus for controlling a terminal of the unreported application. The mobile office device may be set to registering, after the installation is installed, the application into the apparatus for controlling a terminal.

The application identity is information that can uniquely identify the application. Here, both the application identity and the terminal identity are reported in the application registration request, so that the apparatus for controlling a terminal can know to which mobile office device the reported application belongs and accordingly store correspondence between the application identity and the terminal identity. For example, a certain application "Steal vegetable" exists on a mobile office device A.

403. The apparatus for controlling a terminal sets time control information of the application.

After receiving an application registered by the mobile office device, the apparatus for controlling a terminal sets time control information of the application, where the time control information is used to limit use time of the application.

An example is as follows: It is assumed that an application "Email" exists on the mobile office device. Such an application is an office application, and may be limited to use during both working time and non-working time or limited to use only during working time, or the like. In this embodiment, it is taken as an example that the application is available during both the working time and the non-working time.

The following setting manner may be used: The apparatus for controlling a terminal sets two modes, that is, a working mode and an idle mode, for each mobile office device, and limits time that corresponds to the working mode to "8:00-17:00" and time that corresponds to the idle mode to "After 17:00". The application "Email" is available during both the working time and the non-working time. Therefore, a device mode to which the application "Email" belongs may be set to "Working mode" and "Idle mode". That is, the application "Email" is available in the two modes. In sum, time control information of the application "Email" is "Working mode (8:00-17:00), Idle mode (After 17:00)", and the use time of the application limited by the time control information is all time. The time control information "Working mode (8:00-17:00), Idle mode (After 17:00)" may also be called use time information of the application.

Another example is as follows: It is assumed that an application "Microblog" exists on the mobile office device. Such an application is an entertainment application, and may be limited to use only during the non-working time. According to the preceding two modes of a mobile office device, a device mode to which the application "Microblog" belongs may be obtained as "Idle mode" and then time control information of the application "Microblog" is "Idle mode (After 17:00)", which is also the use time information of the application and limits the use time of the application to "After 17:00".

Further, the apparatus for controlling a terminal may set the time control information of the application in multiple manners, and the preceding examples are only optional manners of expressing information. For example, the apparatus for controlling a terminal may further configure, for each application, a type to which each application belongs, such as an entertainment application type or an office application type, and combine the application type and the device mode to limit the use time of the application. For example, a policy "Only an office application can be used when the device mode is the working mode" may be set, and then the time control information of the application "Email" includes "Office type, the preceding policy, and the working mode (8:00-17:00)". As can be seen from this information, the application "Email" is set to an available state in a time period of 8:00-17:00.

404. The apparatus for controlling a terminal sends the time control information of the application to the mobile office device.

When receiving the terminal identity, the apparatus for controlling a terminal may search, according to the terminal identity and the correspondence between the application identity and the terminal identity, applications (that is, applications that correspond to the terminal identity, such as multiple application identities) on the terminal, and send the time control information of the application, that is, the use time information used to limit the use time of the application, to the mobile office device.

It should be noted that the apparatus for controlling a terminal, for example, may store all application identities reported by the mobile office device at certain login of the mobile office device, and set the time control information of the application that corresponds to the application identity and the like; at next login of the mobile office device, the apparatus for controlling a terminal may send, according to the previously-set information such as the correspondence between the application identity and the terminal identity, the previously-set time control information of the application to the mobile office device.

405. The mobile office device controls the use time of the application according to the time control information.

After receiving the time control information sent by the apparatus for controlling a terminal, the mobile office device controls the use time of the application according to the time control information. A specific controlling manner is as follows: For example, as described in 403, the time control information of the applications, such as the working mode (8:00-17:00), is time-based; therefore, time accuracy of the mobile office device itself needs to be ensured so as to perform control according to the time control information. Time of the mobile office device itself may be called local time.

First, the mobile office device is set to prohibit use of a time setting function, so that the mobile office device must perform time synchronization with a time synchronization server so as to acquire the local time.

An address of the time synchronization server may be configured in advance on the mobile office device when the mobile office device is delivered from a factory, so that the mobile office device can periodically initiate a time synchronization process to the time synchronization server according to this address. The address of the time synchronization server may be an IP address, a domain name, or the like, such as 192.168.0.1 or ntp.xxx.com. Generally, two addresses may be simultaneously configured. When one address is unavailable, a second address is used as backup to improve system reliability. The address of the time synchronization server cannot be manually changed. The mobile office device, for example, may be configured to perform a calibration upon each power-on or perform a calibration at fixed time every day, actively initiating a time synchronization request to the time synchronization server; and the time synchronization server returns current time of a current time zone in which the mobile office device resides. More accurately, the mobile office device may obtain accurate time information while considering a factor of time transmission, with an error smaller than one second.

Next, on a basis of ensuring accuracy of the local time of the mobile office device, the use time of the application is controlled according to both the use time information of the application that is acquired from the apparatus for controlling a terminal and the local time.

For example, the mobile office device may periodically check a time change, such as executing a checking operation at a first second of every minute, and set a state of an application according to the time, where the state is "Available" or "Disabled"; and if current local time is within an application-available time range limited by the use time information of the application, set the application to the available state, or otherwise set the application to the disabled state. An example is as follows: It is assumed that the application "Microblog" is available only during the non-working time, and the non-working time is "After 17:00", and then the application "Microblog" is set to "Disabled" if the mobile office device checks and finds that time is 15:01. In this case, the application cannot be started, no matter whether a user attempts to start the application by using whatever manner such as direct clicking or a command line. If the mobile office device checks and finds that the time is 17:00, the application "Microblog" is set to "Available" and the user can start this application.

It should be noted that switching of the state of an application that goes along with a change to the time is also automatically executed by the mobile office device, and does not need to be manually triggered by the user. For example, the state of the application "Microblog" is "Disabled" during the working time 8:00-17:00. When the mobile office device performs a time checking operation at the first second of every minute and finds that the current local time is 17:01, the state of the application can be automatically changed from "Disabled" to "Available" according to use time information "Belonging to the idle mode (After 17:00)" of the application "Microblog".

In addition, for an application not yet registered into the apparatus for controlling a terminal, the mobile office device sets the application to "Disabled" by default to prohibit the application from being started. For example, the application management subunit of the mobile office device sets the state of an application according to the time control information of the application sent by the apparatus for controlling a terminal, and the apparatus for controlling a terminal sends time control information of all the applications on the terminal to the mobile office device. If the mobile office device finds that there is no time control information of a certain application among the time control information sent by the apparatus for controlling a terminal, for example, there is no application identity of the application (probably indicating that the application is not yet registered into the apparatus for controlling a terminal) or there is an application identity but no time control information of the application (probably indicating that the apparatus for controlling a terminal considers that the application is always disabled), the mobile office device may set the state of the application to "Disabled" accordingly, so that the application is always disabled and cannot be started even if the device is in the idle mode.

In some special cases, an application in a locally disabled state on the mobile office device, such as an application not yet registered into the apparatus for controlling a terminal or an application not yet reaching an available time period, needs to be temporarily started. In this case, to ensure a normal working requirement, the mobile office device may send an application start request for requesting start of the application to the apparatus for controlling a terminal, carrying an application identity of the application and the terminal identity of the mobile office device. When determining, according to the request, the terminal identity, and the application identity, that the application is allowed to be started, the apparatus for controlling a terminal returns a start command used to indicate the start of the application to the mobile office device, so that the mobile office device may set the state of the application to "Available" according to the command and then the application can be used. For example, the start command returned by the apparatus for controlling a terminal may be a dynamic password that changes along with time, and the mobile office device can change the state of the application by entering the dynamic command.

Further, to facilitate a user of the mobile office device to clearly see a state of each application on his or her mobile office device, such as conveniently and vividly identifying whether each application is in the available state or in the disabled state, the mobile office device in this embodiment may set different screen display states according to states of applications. For example, when a certain application is in the available state, a screen that corresponds to the application may be set to a high-luminance color of normal working; and when a certain application is in the disabled state, a screen that corresponds to the application may be set to gray, so that the user can conveniently know whether a current application is available according to a display color of a screen of the application.

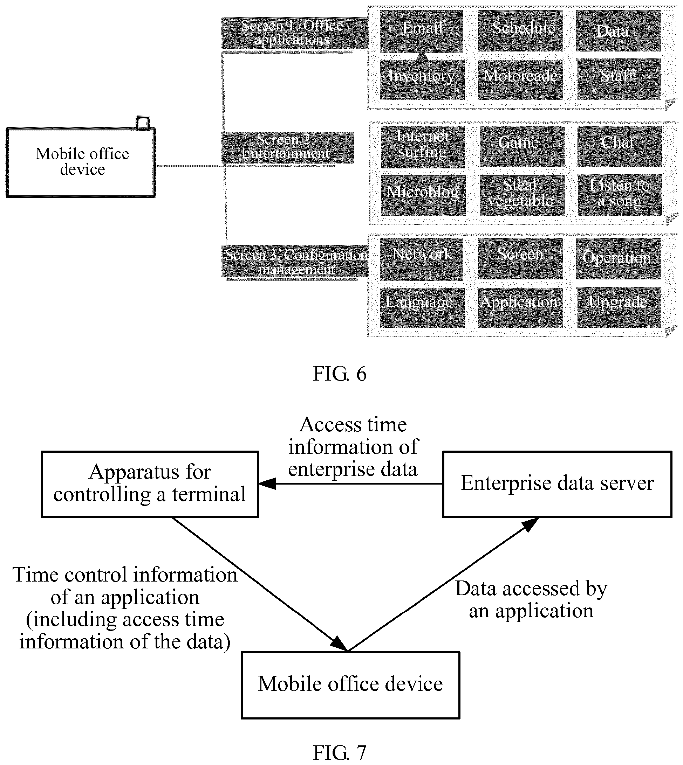

Further, different types of applications may be set on different screens of the mobile office device according to states of applications. For example, refer to FIG. 5 and FIG. 6. FIG. 5 is a schematic diagram 1 of screen settings of a mobile office device in a method for controlling a terminal according to still another embodiment of the present invention. FIG. 6 is a schematic diagram 2 of screen settings of a mobile office device in a method for controlling a terminal according to still another embodiment of the present invention. In this embodiment, three types of screens are set on the mobile office device. One type is a screen 1: office applications, including work-related applications such as Email, Schedule, and Motorcade; another type is a screen 2: entertainment applications, including Internet surfing, Game, and Chat; and still another type is a screen 3: configuration management, including Language, Operation, and Upgrade. The preceding screen types of applications, for example, may be set by the user of the mobile office device.

FIG. 5 shows screens in a working mode, where the screen 1 and the screen 3 are in an activated state in the working mode, and each application on these screens can be normally started and used. In FIG. 5, blue indicates that an application is in a normal state, whereas all applications on the screen 2 cannot be started, because these applications do not fall within specified use time. In specific implementation, these applications may be set to a gray state, or the screen 2 may be directly set to a locked state. FIG. 6 shows screens in an idle mode, that is, in a non-working mode. All applications on each screen can be normally started. Therefore, all these screens are indicated by blue, that is, they are in the normal state. An enterprise application, a personal application, or the like may be well differentiated by distributing the applications on different screens, thereby achieving much clearer management of the applications.

### Embodiment 4

In the present invention, a mobile office is still used as an example. Mostly, on a basis of Embodiment 3, management of security of a data service of an enterprise is further strengthened. FIG. 7 is a schematic diagram of relationships between devices in a method for controlling a terminal according to still another embodiment of the present invention. For some office applications on a mobile office device, such as applications "Inventory", "Motorcade", and "Schedule" related to work of a logistics enterprise, a data server of the enterprise needs to be accessed during use of these applications. The data server provides enterprise data corresponding to the application. These enterprise data need to be kept confidential and usually can only be accessed by a terminal of the enterprise.

In this embodiment, access time information of the enterprise data is set, so that these data can be used only within a specified time range. For example, the data can be used only during the working time, or can be used only in a certain time period of the working time. In such time, generally the enterprise monitors use of these data, so that timely processing can be performed when an exception occurs. Compared with a situation that the data can be accessed at any time, this surely improves security of the data and reduces possibility of data disclosure. In this embodiment, mostly data is bound to an application, and use of the data is synchronized with use of the application. That is, when setting time control information of an application on a mobile office device, the apparatus for controlling a terminal also incorporates the access time information of the enterprise data into the time control information. The access time information of the enterprise data and the use time information of the application (such as use only in 8:00-17:00) are together used as the time control information of the application to determine whether the application is available.

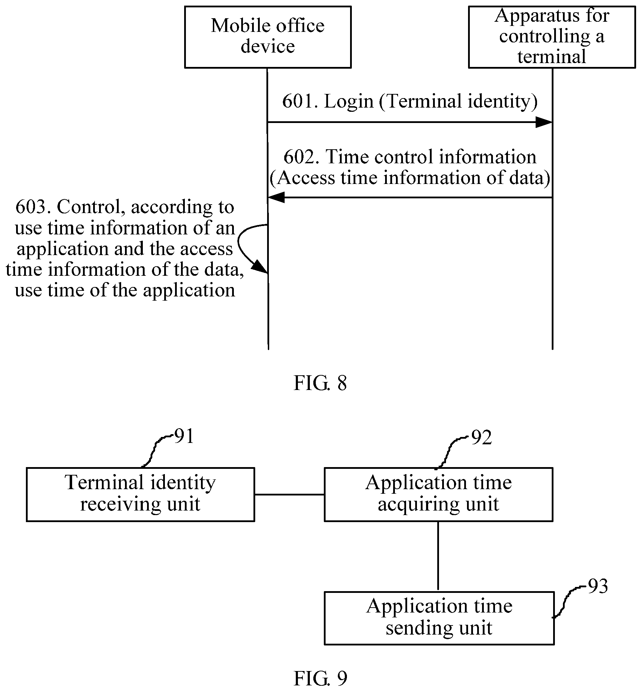

FIG. 8 is a schematic signaling diagram of a method for controlling a terminal according to still another embodiment of the present invention. As shown in FIG. 7 and FIG. 8, the method for controlling a terminal according to this embodiment may include the following steps:
601. A mobile office device sends a login request to the apparatus for controlling a terminal, where the login request carries a terminal identity of the mobile office device.
602. The apparatus for controlling a terminal sends time control information of an application that corresponds to the terminal identity to the mobile office device.

In this embodiment, the time control information further includes access time information of data to be accessed by the application, in addition to the use time information of the application such as "This application is used in the working mode (8:00-17:00)". For example, the application "Inventory" needs to access a data server on an internal network of the enterprise during use. The data server stores enterprise data that corresponds to the application "Inventory". In addition, access time information of the data, such as "This data can be used only during 8:00-10:00", a terminal identity that corresponds to the data, and an application identity (used to indicate that the data can be accessed by which application on which mobile office device) are further recorded for the data.

In this embodiment, when the terminal identity is received, time control information of each application that corresponds to the terminal identity is sent to the mobile office device.

603. The mobile office device controls, according to the use time information of the application and the access time information of the data, use time of the application.

The mobile office device controls, according to the use time information of the application and the access time information of the data, use time of the application.

An example is as follows: It is assumed that use time information that corresponds to the application "Inventory" is "This application is used in the working mode (8:00-17:00)", indicating that the application "Inventory" is set to the available state only in the time period of 8:00-17:00 and can be started in this time period, and the use time of the application is limited based on the working mode of the mobile office device. In this embodiment, the access time information of the enterprise data that corresponds to the application "Inventory" is "This data can be used only during 8:00-10:00", that is, the data is open only in a time period of 8:00-10:00 and cannot be accessed in any other time.

For example, it is assumed that current time is 9:00. The mobile office device queries time control information of "Inventory", where the time control information includes the preceding two aspects: the use time information of the application and the access time information of the data. An obtained query result is that the application is in the available state at this time and the data can be accessed. Then the mobile office device determines that the application "Inventory" can be normally started and normally starts the application "Inventory".

For another example, it is assumed that the current time is 11:00. The mobile office device queries the time control information of "Inventory". An obtained query result is that the application is in the available state at this time but the data cannot be accessed and is within a non-open time period. Then the mobile office device determines that the application "Inventory" cannot be started. In this case, the mobile office device may give a prompt "The data service currently to be accessed is unavailable" to the user, indicating that currently the application cannot be started because the data cannot be accessed.

For another example again, it is assumed that the current time is 18:00. The mobile office device queries the time control information of "Inventory". An obtained query result is that the application is in the "disabled" state at this time and the data is within a non-open time period. Then the mobile office device determines that the application "Inventory" cannot be started. In this case, the mobile office device may give a prompt "No permission to start the application in the current mode" to the user, indicating that currently the application cannot be started because it does not belong to a use time period of the application.

The preceding description lists only a feasible implementation manner and specific implementation is not limited thereto, as long as whether the application is available can be determined comprehensively according to the use time information of the application and the access time information of the data. For example, the mobile office device may further set, according to the use time information of the application and the access time information of the data, the state of the application to "Available" or "Disabled", and directly determine, according to the state and at corresponding time, whether the application can be started.

An example is as follows: It is still assumed that the use time information of the application "Inventory" is "This application is used in the working mode (8:00-17:00)" and the access time information of the enterprise data that corresponds to the application "Inventory" is "This data can be used only during 8:00-10:00". Then the state of the application is set to "Available" (Because both the application and the data are available) in the time period "8:00-10:00"; the state of the application is set to "Disabled" (Because the data is unavailable) in the time period "10:00-17:00"; and the state of the application is set to "Disabled" (Because neither the application nor the data is available) in the time period "After 17:00". Then whether the application can be started may be determined directly according to the state.

In the preceding embodiment, how to control, by using a method for controlling a terminal according to the present invention, use time of an application on a terminal is described. On this basis, how to ensure security of data accessed by the application will be further considered. For example, in a mobile office scenario, an enterprise not only needs to control use time of a mobile office device to ensure office efficiency, but also focuses more and more on ensuring security of accessing internal data of the enterprise, because data security of the enterprise is threatened if a user of the mobile office device is not subject to any limit in terms of application security and uses an application without being restricted. Therefore, the following Embodiment 5 and Embodiment 6 list two feasible solutions for security limiting on use of an application.

### Embodiment 5

In this embodiment, an apparatus for controlling a terminal strictly reviews an application on a terminal. An application that threats security of data to be accessed by the application will be prohibited from use. For example, after the terminal reports an installed application to the apparatus for controlling a terminal, the apparatus for controlling a terminal may review in advance the application before setting time control information for the application. If it is discovered that the installed application is a remote desktop application or a cloud application such as an HTML4 or HTML5 application, such an application is determined to be an application prohibited from use and time control information is no longer set for the application. When sending time control information of applications to the terminal, the apparatus for controlling a terminal may send only time control information of available applications to the terminal. For a remote desktop application or a cloud application, the apparatus for controlling a terminal no longer sends time control information of the application to the terminal.

Since a remote desktop application or a cloud application is an application of a tool type rather than a special client application developed specifically to implement a certain type of applications, it may freely access various services and therefore may cause a security threat to data to be accessed by the application. Therefore, in this embodiment, such a type of applications is reviewed and filtered. In specific implementation, an enterprise may also set a type of applications to be filtered according to its actual situation.

An example is as follows: Generally, a special client similar to Outlook is required to access a mailbox. It is a dedicated tool and is a special client application developed specifically to implement a mailbox application. However, sometimes a user may access a mailbox by using a browser. The browser can not only access the mailbox but also watch news or log in to another website, and is a general-purpose tool, and may therefore cause a security threat to enterprise data. For enterprise applications, most of them implement access based on a dedicated tool. In this embodiment, an application of a general-purpose tool type is more strictly reviewed and limited, so that an enterprise application can only implement access by using a dedicated tool, thereby ensuring enterprise data security.

### Embodiment 6

In this embodiment, for some applications capable of unrestricted access to the Internet, such as HTML4 and HTML5 applications, a measure of completely prohibiting such applications may not be taken, but an access address of such an application is limited, as long as the access address of the application is secure. In addition, an apparatus for controlling a terminal sets address access limit information that corresponds to a terminal identity, and a terminal user himself or herself is prohibited from locally editing the address access limit information. The apparatus for controlling a terminal may send, when sending time control information that corresponds to the terminal identity to a terminal, the address access limit information together to the terminal, so that the terminal controls an access address of an application according to the address access limit information.

An example is as follows: The apparatus for controlling a terminal may limit a destination IP address accessed by an HTML4\HTML5 application. Generally, this may be implemented by using two manners, a white list or a black list of the destination IP address, and the terminal user is prohibited from locally editing the white list or the black list of the destination IP address. Here, the white list or the black list of the destination IP address may be called "address access limit information".

White list: a list of addresses that is allowed to be accessed by the application. An address in the list can be normally accessed, and an address not appearing in the list is not allowed to be accessed. Generally, IP addresses are presented as an address segment, such as 202.129.1.1-201.129.10.254. Then an IP address in this address segment can be accessed, and the others are unauthorized.

Black list: a list of addresses that the application is prohibited from accessing. An address in the list cannot be normally accessed, and an address appearing in the list is not allowed to be accessed. Generally, IP addresses are presented as an address segment, such as 202.129.1.1-201.129.10.254. Then an IP address in this address segment cannot be accessed, and the others are authorized access addresses.

The apparatus for controlling a terminal may send, when sending the time control information that corresponds to the terminal identity to the terminal, the address access limit information together to the terminal. When starting the application, the terminal checks, according to the address access limit information in a process of HTML4\HTML5 address resolution, the destination IP address to be accessed by the application. If the address is within an address range of the white list, allow continual accessing; otherwise, refuse accessing. Or if the address is within an address range of the black list, refuse accessing; otherwise allow continual accessing.

The method for controlling a terminal according to this embodiment is applicable to a mobile office scenario and can, when used in a mobile office scenario, improve security of enterprise data and prevent a risk, such as enterprise data disclosure caused by unrestricted use of an application on a mobile office device.

### Embodiment 7

This embodiment provides a structure of an apparatus for controlling a terminal, where the apparatus for controlling a terminal may execute the method for controlling a terminal according to any embodiment of the present invention. The apparatus for controlling a terminal may be an apparatus for controlling a terminal in a mobile office, a home gateway in a home scenario, or the like.

FIG. 9 is a schematic structural diagram of an apparatus for controlling a terminal according to an embodiment of the present invention. As shown in FIG. 9, the apparatus may include: a terminal identity receiving unit 91, an application time acquiring unit 92, and an application time sending unit 93, where:
the terminal identity receiving unit 91 is configured to receive a terminal identity sent by a terminal;
the application time acquiring unit 92 is configured to acquire, according to the terminal identity, time control information that corresponds to an application identity of an application on the terminal; and
the application time sending unit 93 is configured to send the time control information to the terminal, so that the terminal controls, according to the time control information, use time of the application that corresponds to the application identity.

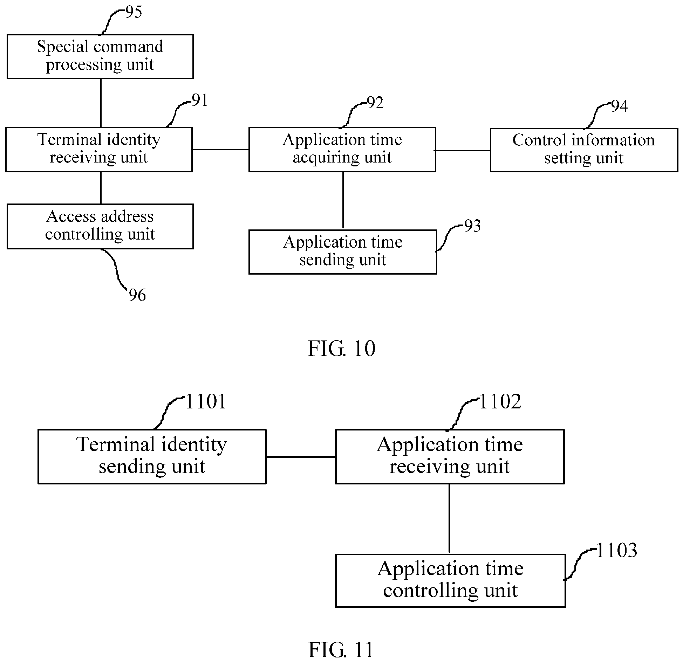

FIG. 10 is a schematic structural diagram of an apparatus for controlling a terminal according to another embodiment of the present invention. As shown in FIG. 10, on a basis of the structure shown in FIG. 9, the application time acquiring unit 92 of the apparatus is specifically configured to acquire, according to the terminal identity, an application identity that corresponds to the terminal identity, where the application identity is an application identity of an application on the terminal; and acquire, according to the application identity, time control information that corresponds to the application identity.

Further, the time control information includes use time information of the application, so that the terminal controls the use time of the application according to the use time information.

Further, the time control information further includes access time information of data to be accessed by the application, so that the terminal controls, according to the use time information of the application and the access time information of the data, the use time of the application.

Further, the terminal identity receiving unit 91 is specifically configured to receive an application registration request sent by the terminal, where the application registration request carries an application identity of an application on the terminal and the terminal identity; and
the apparatus may further include: a control information setting unit 94, configured to store correspondence between the application identity and the terminal identity, and set the time control information that corresponds to the application identity, so that the application time acquiring unit acquires the time control information according to the terminal identity.

Further, the control information setting unit 94 is further configured to review the application that corresponds to the application identity received by the terminal identity receiving unit, and if the application is a remote desktop application or a cloud application, no longer set the time control information of the application.

Further, the apparatus may further include: a special command processing unit 95, configured to receive an application start request sent by the terminal for requesting start of an application, where the application is an application currently in a disabled state on the terminal; and send a start command used to indicate the start of the application to the terminal according to the application start request, so that the terminal sets the application to an available state according to the start command.

Further, the apparatus may further include: an access address controlling unit 96, configured to acquire address access limit information that corresponds to the application identity, and control an access address of the application according to the address access limit information.

### Embodiment 8

This embodiment provides a structure of a terminal, where the terminal may execute the method for controlling a terminal according to any embodiment of the present invention. The terminal may be a mobile office device in a mobile office.

FIG. 11 is a schematic structural diagram of a terminal according to an embodiment of the present invention. As shown in FIG. 11, the terminal may include: a terminal identity sending unit 1101, an application time receiving unit 1102, and an application time controlling unit 1103, where:
the terminal identity sending unit 1101 is configured to send a terminal identity of the terminal to an apparatus for controlling a terminal, so that the apparatus for controlling a terminal acquires, according to the terminal identity, time control information that corresponds to an application identity of an application on the terminal;
the application time receiving unit 1102 is configured to receive the time control information sent by the apparatus for controlling a terminal; and
the application time controlling unit 1103 is configured to control, according to the time control information and local time, use time of the application that corresponds to the application identity.

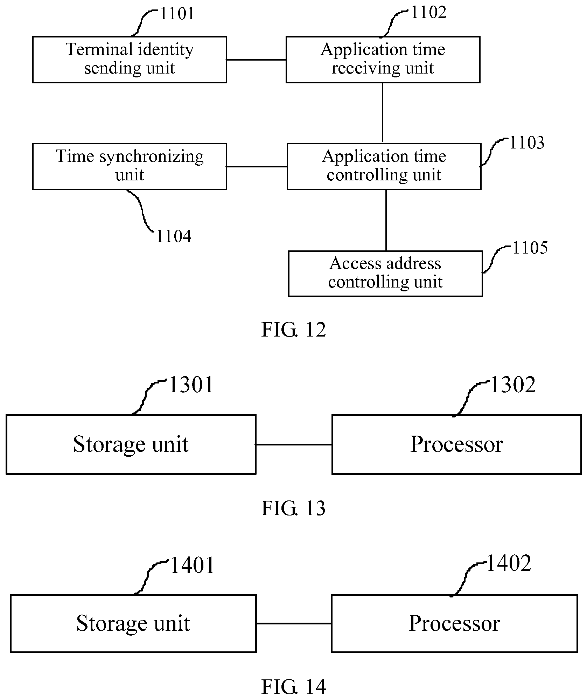

FIG. 12 is a schematic structural diagram of a terminal according to another embodiment of the present invention. As shown in FIG. 12, on a basis of the structure shown in FIG. 11, the application time controlling unit 1103 of the terminal is specifically configured to control, according to the use time information of the application and the local time, the use time of the application, including: setting the application to an available state if the local time is within an application-available time range limited by the use time information, or otherwise setting the application to a disabled state.

Further, the terminal may further include: a time synchronizing unit 1104, configured to perform time synchronization with a time synchronization server so as to acquire the local time.

Further, the time control information further includes: access time information of data to be accessed by the application; and the application time controlling unit 1103 is specifically configured to control, according to the use time information of the application, the access time information of the data, and the local time, the use time of the application, including: setting the application to the available state if the local time is both within an application-available time range limited by the use time information of the application and within a data-available time range limited by the access time information of the data, or otherwise setting the application to the disabled state.

Further, the terminal may further include: an access address controlling unit 1105, configured to receive address access limit information that is sent by the apparatus for controlling a terminal and corresponds to an application, and control an access address according to the address access limit information when the application is being used.

### Embodiment 9

FIG. 13 is an entity structure diagram of an apparatus for controlling a terminal according to an embodiment of the present invention. As shown in FIG. 13, the apparatus for controlling a terminal includes a storage unit 1301 and a processor 1302, where:
the storage unit 1301 is configured to store an application identity that corresponds to a terminal identity, and time control information that corresponds to the application identity; and
the processor 1302 is configured to receive a terminal identity sent by a terminal; acquire, according to the terminal identity, time control information that corresponds to an application identity of an application on the terminal; and send the time control information to the terminal, so that the terminal controls, according to the time control information, use time of the application that corresponds to the application identity.

FIG. 14 is an entity structure diagram of a terminal according to an embodiment of the present invention. As shown in FIG. 14, the terminal includes: a storage unit 1401 and a processor 1402, where:
the storage unit 1401 is configured to store time control information received from an apparatus for controlling a terminal; and
the processor 1402 is configured to send a terminal identity of the terminal to an apparatus for controlling a terminal, so that the apparatus for controlling a terminal acquires, according to the terminal identity, the time control information that corresponds to an application identity of an application on the terminal, and receive the time control information sent by the apparatus for controlling a terminal, and control, according to the time control information and local time, use time of the application that corresponds to the application identity.

In an embodiment of the present invention, a method for controlling a terminal is provided. The method includes:
receiving a terminal identity sent by a terminal;
acquiring, according to the terminal identity, time control information that corresponds to an application identity of an application on the terminal; and
sending the time control information to the terminal, so that the terminal controls, according to the time control information, use time of the application that corresponds to the application identity.

In a possible implementation manner, the acquiring, according to the terminal identity, time control information that corresponds to an application identity of an application on the terminal includes: acquiring, according to the terminal identity, an application identity that corresponds to the terminal identity, where the application identity is an application identity of an application on the terminal; and acquiring, according to the application identity, time control information that corresponds to the application identity.

In another possible implementation manner, the time control information includes use time information of the application, so that the terminal controls the use time of the application according to the use time information.

In still another possible implementation manner, the time control information further includes access time information of data to be accessed by the application, so that the terminal controls, according to use time information of the application and the access time information of the data, the use time of the application.

In still another possible implementation manner, before the sending the time control information to the terminal, the method further includes: receiving an application registration request sent by the terminal, where the application registration request carries an application identity of an application on the terminal and the terminal identity; and storing correspondence between the application identity and the terminal identity, and setting the time control information that corresponds to the application identity, so that the time control information is acquired according to the terminal identity.

In still another possible implementation manner, before the setting the time control information that corresponds to the application identity, the method further includes: reviewing the application that corresponds to the application identity, and if the application is a remote desktop application or a cloud application, no longer setting the time control information of the application. In still another possible implementation manner, after the receiving a terminal identity sent by a terminal, the method further includes: receiving an application start request sent by the terminal for requesting start of an application, where the application is an application currently in a disabled state on the terminal; and sending a start command used to indicate the start of the application to the terminal according to the application start request, so that the terminal sets the application to an available state according to the start command.

In still another possible implementation manner, after the acquiring an application identity of an application that corresponds to the terminal identity and time control information that corresponds to the application identity, the method further includes: acquiring address access limit information that corresponds to the application identity, and controlling an access address of the application according to the address access limit information.

A person of ordinary skill in the art may understand that, all or a part of the steps of the foregoing method embodiments may be implemented by a program instructing relevant hardware. The foregoing programs may be stored in a computer readable storage medium. When the program runs, the foregoing steps included in the method embodiments are performed. The foregoing storage medium includes various mediums capable of storing program codes, such as a ROM, a RAM, a magnetic disk or an optical disk.

Finally, it should be noted that the foregoing embodiments are merely intended for describing the technical solutions of the present invention rather than limiting the present invention. Although the present invention is described in detail with reference to the foregoing embodiments, a person of ordinary skill in the art should understand that he may still make modifications to the technical solutions described in the foregoing embodiments, or make equivalent replacements to some or all the technical features thereof, without departing from the scope of the technical solutions of the embodiments of the present invention.

## Claims

1. A method for controlling used in a terminal, comprising:
sending (301), by the terminal, a terminal identity of the terminal to an apparatus for controlling the terminal;
sending, by the terminal, an application start request for requesting start of an application to the apparatus for controlling the terminal, wherein the application is an application currently in a locally disabled state; and
receiving, by the terminal, a start command that is returned by the apparatus for controlling the terminal and used to indicate the start of the application, and setting the application to the available state according to the start command;
receiving (302), by the terminal, time control information that is sent by the apparatus for controlling the terminal and corresponds to the application identity of the application on the terminal, wherein the time control information is acquired by the apparatus for controlling the terminal according to the terminal identity; and
controlling (303), by the terminal, according to the time control information and local time, use time of the application that corresponds to the application identity;
setting different screen display states according to the state of the application;
wherein the method further comprises:
setting different types of applications on different screens according to the states of the applications.

2. The method for controlling used in the terminal according to claim 1, wherein the receiving, by the terminal, time control information that is sent by the apparatus for controlling the terminal and corresponds to an application identity of an application on the terminal comprises:
receiving, by the terminal, the time control information that is sent by the apparatus for controlling the terminal, wherein the time control information comprises use time information of the application on the terminal; and
the controlling, by the terminal according to the use time information of the application and local time, use time of the application comprises: setting the application to an available state if the local time is within an application-available time range limited by the use time information, or otherwise setting the application to a disabled state.

3. The method for controlling used in the terminal according to claim 2, wherein before the controlling, by the terminal according to the use time information of the application and local time, use time of the application, the method further comprises:
performing time synchronization with a time synchronization server so as to acquire the local time.

4. The method for controlling used in the terminal according to claim 2 or 3, wherein the time control information received by the terminal further comprises: access time information of data to be accessed by the application; and
after the receiving, by the terminal, time control information that is sent by the apparatus for controlling the terminal, the method further comprises:
controlling, by the terminal according to the use time information of the application, the access time information of the data, and the local time, the use time of the application; and the controlling the use time of the application comprises: setting the application to the available state if the local time is both within the application-available time range limited by the use time information of the application and within a data-available time range limited by the access time information of the data, or otherwise setting the application to the disabled state.

5. The method for controlling used in the terminal according to any one of claims 1-4, wherein after the receiving, by the terminal, time control information that is sent by the apparatus for controlling the terminal, the method further comprises:
receiving, by the terminal, address access limit information that is sent by the apparatus for controlling the terminal and corresponds to the application, and controlling an access address according to the address access limit information when the application is being used.

6. The method for controlling used in the terminal according to any one of claims 1-5, wherein the setting different screen display states according to states of applications further comprises:
when the application is in the available state, a screen corresponding to the application is set to a high-luminance color; or
when the application is in the disabled state, a screen corresponding to the application is set to gray.

7. A terminal, comprising:
a terminal identity sending unit (1101), configured to send a terminal identity of the terminal to an apparatus for controlling the terminal, so that the apparatus for controlling the terminal acquires, according to the terminal identity, time control information that corresponds to an application identity of an application on the terminal;
an application time receiving unit (1102), configured to receive the time control information sent by the apparatus for controlling the terminal; and
an application time controlling unit (1103), configured to control, according to the time control information and local time, use time of the application that corresponds to the application identity;
wherein the terminal is configured to send an application start request to the apparatus for requesting start of the application, wherein the application is an application currently in a disabled state on the terminal; and receive a start command used to indicate the start of the application from the apparatus, and set the application to an available state according to the start command;
wherein the terminal further comprises a screen,
the screen is configured to display different screen states according to the state of the application;
wherein different types of applications are set on different screens according to the states of the applications, and the screen is configured to display different screens according to the states of the applications.

8. The terminal according to claim 7, wherein the time control information comprises use time information of the application on the terminal; and
the application time controlling unit (1103) is specifically configured to control, according to the use time information of the application and the local time, the use time of the application, comprising: setting the application to an available state if the local time is within an application-available time range limited by the use time information, or otherwise setting the application to a disabled state.

9. The terminal according to claim 7 or 8, wherein the terminal further comprises: a time synchronizing unit (1104), configured to perform time synchronization with a time synchronization server so as to acquire the local time.

10. The terminal according to claim 8 or 9, wherein the time control information further comprises access time information of data to be accessed by the application; and
the application time controlling unit (1103) is specifically configured to control, according to the use time information of the application, the access time information of the data, and the local time, the use time of the application, comprising: setting the application to the available state if the local time is both within the application-available time range limited by the use time information of the application and within a data-available time range limited by the access time information of the data, or otherwise setting the application to the disabled state.

11. The terminal according to any one of claims 7-10, wherein the terminal further comprises:
an access address controlling unit (1105), configured to receive address access limit information that is sent by the apparatus for controlling the terminal and corresponds to an application, and control an access address according to the address access limit information when the application is being used.

12. The terminal according to any one of claims 7-10, wherein the screen is configured to display a screen corresponding to the application that is set to a high-luminance color when the application is in the available state; or
the screen is configured to display a screen corresponding to the application that is set to gray when the application is in the disabled state.

13. An apparatus for controlling a terminal, comprising:
a terminal identity receiving unit (91), configured to receive a terminal identity sent by a terminal;
an application time acquiring unit (92), configured to acquire, according to the terminal identity, time control information that corresponds to an application identity of an application on the terminal;
an application time sending unit (93), configured to send the time control information to the terminal, so that the terminal controls use time of the application that corresponds to the application identity according to the time control information; and
a special command processing unit (95), configured to receive an application start request sent by the terminal for requesting start of the application, wherein the application is an application currently in a disabled state on the terminal; and send a start command used to indicate the start of the application to the terminal according to the application start request, so that the terminal sets the application to an available state according to the start command;
wherein different screen display states are set according to the state of the application;
wherein different types of applications are set on different screens according to the states of the applications, and the screen is configured to display different screens according to the states of the applications.

14. The apparatus for controlling the terminal according to claim 13, wherein: the application time acquiring unit (92) is specifically configured to acquire, according to the terminal identity, an application identity that corresponds to the terminal identity, wherein the application identity is an application identity of an application on the terminal; and acquire, according to the application identity, the time control information that corresponds to the application identity.

15. The apparatus for controlling the terminal according to claim 13 or 14, wherein: the terminal identity receiving unit (91) is specifically configured to receive an application registration request sent by the terminal, and the application registration request carries an application identity of an application on the terminal and the terminal identity; and
the apparatus further comprises: a control information setting unit (94), configured to store correspondence between the application identity and the terminal identity, and set the time control information that corresponds to the application identity, so that the application time acquiring unit acquires the time control information according to the terminal identity.

16. The apparatus for controlling the terminal according to claim 15, wherein: the control information setting unit (94) is further configured to review the application that corresponds to the application identity received by the terminal identity receiving unit, and if the application is a remote desktop application or a cloud application, no longer set the time control information of the application.

## Patentansprüche

1. Verfahren zur Steuerung, das bei einem Endgerät verwendet wird, umfassend:
Senden (301) durch das Endgerät einer Endgeräteidentität des Endgeräts zu einer Vorrichtung zur Steuerung des Endgeräts;
Senden durch das Endgerät einer Anwendungsstartanforderung zum Anfordern des Starts einer Anwendung zu der Vorrichtung zur Steuerung des Endgeräts, wobei die Anwendung eine Anwendung ist, die sich aktuell in einem lokal deaktivierten Zustand befindet; und
Empfangen durch das Endgerät eines Startbefehls, der von der Vorrichtung zur Steuerung des Endgeräts zurückgegeben wird und verwendet wird, um den Start der Anwendung anzuzeigen, und Einstellen der Anwendung auf den verfügbaren Zustand gemäß dem Startbefehl;
Empfangen (302) durch das Endgerät von Zeitsteuerinformationen, die von der Vorrichtung zur Steuerung des Endgeräts gesendet werden und der Anwendungsidentität der Anwendung auf dem Endgerät entsprechen, wobei die Zeitsteuerinformationen von der Vorrichtung zur Steuerung des Endgeräts gemäß der Endgeräteidentität erfasst werden; und
Steuern (303) durch das Endgerät gemäß den Zeitsteuerinformationen und der Ortszeit der Verwendungszeit der Anwendung, die der Anwendungsidentität entspricht;
Einstellen verschiedener Bildschirmanzeigezustände gemäß dem Zustand der Anwendung;
wobei das Verfahren ferner Folgendes umfasst:
Einstellen verschiedener Arten von Anwendungen auf verschiedenen Bildschirmen gemäß den Zuständen der Anwendungen.

2. Verfahren zur Steuerung, das bei dem Endgerät verwendet wird, nach Anspruch 1, wobei das Empfangen durch das Endgerät von Zeitsteuerinformationen, die von der Vorrichtung zur Steuerung des Endgeräts gesendet werden und einer Anwendungsidentität einer Anwendung auf dem Endgerät entsprechen, Folgendes umfasst:
Empfangen durch das Endgerät der Zeitsteuerinformationen, die von der Vorrichtung zur Steuerung des Endgeräts gesendet werden, wobei die Zeitsteuerinformationen Verwendungszeitinformationen der Anwendung auf dem Endgerät umfassen; und
das Steuern durch das Endgerät gemäß den Verwendungszeitinformationen der Anwendung und der Ortszeit der Verwendungszeit der Anwendung Folgendes umfasst: Einstellen der Anwendung auf einen verfügbaren Zustand, wenn sich die Ortszeit innerhalb eines bei der Anwendung verfügbaren Zeitraums befindet, der durch die Verwendungszeitinformationen beschränkt ist, oder ansonsten Einstellen der Anwendung auf einen deaktivierten Zustand.

3. Verfahren zur Steuerung, das bei dem Endgerät verwendet wird, nach Anspruch 2, wobei vor dem Steuern durch das Endgerät gemäß den Verwendungszeitinformationen der Anwendung und der Ortszeit der Verwendungszeit der Anwendung das Verfahren Folgendes umfasst:
Durchführen einer Zeitsynchronisation mit einem Zeitsynchronisationsserver, um die Ortszeit zu erfassen.

4. Verfahren zur Steuerung, das bei dem Endgerät verwendet wird, nach Anspruch 2 oder 3, wobei die Zeitsteuerinformationen, die von dem Endgerät empfangen werden, ferner Folgendes umfassen: Zugriffszeitinformationen von Daten, auf die von der Anwendung zuzugreifen ist; und
nach dem Empfangen durch das Endgerät der Zeitsteuerinformationen, die von der Vorrichtung zur Steuerung des Endgeräts gesendet werden, das Verfahren Folgendes umfasst:
Steuern durch das Endgerät gemäß den Verwendungszeitinformationen der Anwendung der Zugriffszeitinformationen der Daten und der Ortszeit der Verwendungszeit der Anwendung; und das Steuern der Verwendungszeit der Anwendung Folgendes umfasst: Einstellen der Anwendung auf den verfügbaren Zustand, wenn sich die Ortszeit sowohl innerhalb des bei der Anwendung verfügbaren Zeitraums, der durch die Verwendungszeitinformationen der Anwendung beschränkt ist, als auch innerhalb eines bei den Daten verfügbaren Zeitraums, der durch die Zugriffszeitinformationen der Daten beschränkt ist, befindet, oder ansonsten Einstellen der Anwendung auf den deaktivierten Zustand.

5. Verfahren zur Steuerung, das bei dem Endgerät verwendet wird, nach einem der Ansprüche 1-4, wobei nach dem Empfangen durch das Endgerät der Zeitsteuerinformationen, die von der Vorrichtung zur Steuerung des Endgeräts gesendet werden, das Verfahren ferner Folgendes umfasst:
Empfangen durch das Endgerät von Adressenzugriffsbeschränkungsinformationen, die von der Vorrichtung zur Steuerung des Endgeräts gesendet werden und der Anwendung entsprechen, und Steuern einer Zugriffsadresse gemäß den Adressenzugriffsbeschränkungsinformationen, wenn die Anwendung verwendet wird.

6. Verfahren zur Steuerung, das bei dem Endgerät verwendet wird, nach einem der Ansprüche 1-5, wobei das Einstellen verschiedener Bildschirmanzeigezustände gemäß Zuständen von Anwendungen ferner Folgendes umfasst:
wenn sich die Anwendung in dem verfügbaren Zustand befindet, wird ein Bildschirm entsprechend der Anwendung auf eine Farbe mit hoher Leuchtkraft eingestellt; oder
wenn sich die Anwendung in dem deaktivierten Zustand befindet, wird ein Bildschirm gemäß der Anwendung auf Grau eingestellt.

7. Endgerät, das Folgendes aufweist:
eine Endgeräteidentitätssendeeinheit (1101), die konfiguriert ist, um eine Endgeräteidentität des Endgeräts derart zu einer Vorrichtung zur Steuerung des Endgeräts zu senden, dass die Vorrichtung zur Steuerung des Endgeräts gemäß der Endgeräteidentität Zeitsteuerinformationen erfasst, die einer Anwendungsidentität einer Anwendung auf dem Endgerät entsprechen;
eine Anwendungszeitempfangseinheit (1102), die konfiguriert ist, um die Zeitsteuerinformationen zu empfangen, die von der Vorrichtung zur Steuerung des Endgeräts gesendet werden; und
eine Anwendungszeitsteuereinheit (1103), die konfiguriert ist, um gemäß den Zeitsteuerinformationen und der Ortszeit, die Verwendungszeit der Anwendung, die der Anwendungsidentität entspricht, zu steuern;
wobei das Endgerät konfiguriert ist, um eine Anwendungsstartanforderung zu der Vorrichtung zum Anfordern des Starts der Anwendung zu senden, wobei die Anwendung eine Anwendung ist, die sich aktuell in einem deaktivierten Zustand auf dem Endgerät befindet; und einen Startbefehl, der verwendet wird, um den Start der Anwendung anzugeben, von der Vorrichtung zu empfangen und die Anwendung auf einen verfügbaren Zustand gemäß dem Startbefehl einzustellen;
wobei das Endgerät ferner einen Bildschirm aufweist,
wobei der Bildschirm konfiguriert ist, um verschiedene Bildschirmzustände gemäß dem Zustand der Anwendung anzuzeigen;
wobei verschiedene Arten von Anwendungen auf verschiedenen Bildschirmen gemäß den Zuständen der Anwendungen eingestellt werden und der Bildschirm konfiguriert ist, um verschiedene Zustände gemäß den Zuständen der Anwendungen anzuzeigen.

8. Endgerät nach Anspruch 7, wobei die Zeitsteuerinformationen Verwendungszeitinformationen der Anwendung auf dem Endgerät umfassen; und die Anwendungszeitsteuereinheit (1103) insbesondere konfiguriert ist, um gemäß den Verwendungszeitinformationen der Anwendung und der Ortszeit die Verwendungszeit der Anwendung zu steuern, umfassend: Einstellen der Anwendung auf einen verfügbaren Zustand, wenn sich die Ortszeit innerhalb eines bei der Anwendung verfügbaren Zeitraums, der durch die Verwendungszeitinformationen beschränkt ist, befindet, oder ansonsten Einstellen der Anwendung auf einen deaktivierten Zustand.

9. Endgerät nach Anspruch 7 oder 8, wobei das Endgerät ferner Folgendes aufweist: eine Zeitsynchronisationseinheit (1104), die konfiguriert ist, um eine Zeitsynchronisation mit einem Zeitsynchronisationsserver durchzuführen, um die Ortszeit zu erfassen.

10. Endgerät nach Anspruch 8 oder 9, wobei die Zeitsteuerinformationen ferner Zugriffszeitinformationen von Daten, auf die durch die Anwendung zuzugreifen ist, umfassen; und
die Anwendungszeitsteuereinheit (1103) insbesondere konfiguriert ist, um gemäß den Verwendungszeitinformationen der Anwendung, der Zugriffszeitinformationen der Daten und der Ortszeit die Verwendungszeit der Anwendung zu steuern, umfassend: Einstellen der Anwendung auf den verfügbaren Zustand, wenn sich die Ortszeit sowohl innerhalb des bei der Anwendung verfügbaren Zeitraums, der durch die Verwendungszeitinformationen der Anwendung beschränkt ist, als auch innerhalb eines bei den Daten verfügbaren Zeitraums, der durch die Zugriffszeitinformationen der Daten beschränkt ist, befindet, oder ansonsten Einstellen der Anwendung auf den deaktivierten Zustand.

11. Endgerät nach einem der Ansprüche 7-10, wobei das Endgerät ferner Folgendes aufweist:
eine Zugriffsadressensteuereinheit (1105), die konfiguriert ist, um Adressenzugriffsbeschränkungsinformationen zu empfangen, die von der Vorrichtung zur Steuerung des Endgeräts gesendet werden und einer Anwendung entsprechen, und eine Zugriffsadresse gemäß den Adressenzugriffsbeschränkungsinformationen zu steuern, wenn die Anwendung verwendet wird.

12. Endgerät nach einem der Ansprüche 7-10, wobei der Bildschirm konfiguriert ist, um einen Bildschirm gemäß der Anwendung anzuzeigen, der auf eine Farbe mit hoher Leuchtkraft eingestellt wird, wenn sich die Anwendung in dem verfügbaren Zustand befindet; oder
der Bildschirm konfiguriert ist, um einen Bildschirm gemäß der Anwendung anzuzeigen, der auf Grau eingestellt wird, wenn sich die Anwendung in dem deaktivierten Zustand befindet.

13. Vorrichtung zur Steuerung eines Endgeräts, die Folgendes aufweist:
eine Endgeräteidentitätsempfangseinheit (91), die konfiguriert ist, um eine Endgeräteidentität zu empfangen, die von einem Endgerät gesendet wird;
eine Anwendungszeiterfassungseinheit (92), die konfiguriert ist, um gemäß der Endgeräteidentität Zeitsteuerinformationen zu erfassen, die einer Anwendungsidentität einer Anwendung auf dem Endgerät entsprechen;
eine Anwendungszeitsendeeinheit (93), die konfiguriert ist, um die Zeitsteuerinformationen derart zu dem Endgerät zu senden, dass das Endgerät die Verwendungszeit der Anwendung, die der Anwendungsidentität entspricht, gemäß den Zeitsteuerinformationen steuert; und
eine spezielle Befehlsbearbeitungseinheit (95), die konfiguriert ist, um eine von dem Endgerät gesendete Anwendungsstartanforderung zum Anfordern des Starts der Anwendung zu empfangen, wobei die Anwendung eine Anwendung ist, die sich aktuell in einem deaktivierten Zustand auf dem Endgerät befindet; und einen Startbefehl, der verwendet wird, um den Start der Anwendung anzugeben, derart zu dem Endgerät gemäß der Anwendungsstartanforderung zu senden, dass das Endgerät die Anwendung auf einen verfügbaren Zustand gemäß dem Startbefehl einstellt;
wobei verschiedene Bildschirmanzeigezustände gemäß dem Zustand der Anwendung eingestellt werden;
wobei verschiedene Arten von Anwendungen auf verschiedenen Bildschirmen gemäß den Zuständen der Anwendungen eingestellt werden und der Bildschirm konfiguriert ist, um verschiedene Bildschirme gemäß den Zuständen der Anwendungen anzuzeigen.

14. Vorrichtung zur Steuerung des Endgeräts nach Anspruch 13, wobei: die Anwendungszeiterfassungseinheit (92) insbesondere konfiguriert ist, um gemäß der Endgeräteidentität eine Anwendungsidentität zu erfassen, die der Endgeräteidentität entspricht, wobei die Anwendungsidentität eine Anwendungsidentität einer Anwendung auf dem Endgerät ist; und gemäß der Anwendungsidentität die Zeitsteuerinformationen zu erfassen, die der Anwendungsidentität entsprechen.

15. Vorrichtung zur Steuerung des Endgeräts nach Anspruch 13 oder 14, wobei: die Endgeräteidentitätsempfangseinheit (91) insbesondere konfiguriert ist, um eine Anwendungsregistrierungsanforderung zu empfangen, die von dem Endgerät gesendet wird, und die Anwendungsregistrierungsanforderung eine Anwendungsidentität einer Anwendung auf dem Endgerät und die Endgeräteidentität mitführt; und
wobei die Vorrichtung ferner Folgendes aufweist: eine Steuerinformationseinstelleinheit (94), die konfiguriert ist, um eine Übereinstimmung zwischen der Anwendungsidentität und der Endgeräteidentität zu speichern und die Zeitsteuerinformationen, die der Anwendungsidentität entsprechen, derart einzustellen, dass die Anwendungszeiterfassungseinheit die Zeitsteuerinformationen gemäß der Endgeräteidentität erfasst.

16. Vorrichtung zur Steuerung des Endgeräts nach Anspruch 15, wobei: die Steuerinformationseinstelleinheit (94) ferner konfiguriert ist, um die Anwendung zu überprüfen, die der Anwendungsidentität entspricht, die von der Endgeräteidentitätsempfangseinheit empfangen wird, und, wenn die Anwendung eine Remote-Desktop-Anwendung oder eine Cloud-Anwendung ist, die Zeitsteuerinformationen der Anwendung nicht mehr einzustellen.

## Revendications

1. Procédé de contrôle utilisé dans un terminal, comprenant les étapes suivantes :
envoyer (301), par le terminal, une identité de terminal du terminal à un appareil pour contrôler le terminal ;
envoyer, par le terminal, une demande de démarrage d'application pour demander le démarrage d'une application à l'appareil pour contrôler le terminal, où l'application est une application actuellement désactivée localement ; et
recevoir, par le terminal, une commande de démarrage qui est renvoyée par l'appareil pour contrôler le terminal et qui est utilisée pour indiquer le démarrage de l'application, et configurer l'application à l'état disponible selon la commande de démarrage ;
recevoir (302), par le terminal, des informations de contrôle de temps qui sont envoyées par l'appareil pour contrôler le terminal et qui correspondent à l'identité d'application de l'application sur le terminal, où les informations de contrôle de temps sont acquises par l'appareil pour contrôler le terminal selon l'identité du terminal ; et
contrôler (303), par le terminal, selon les informations de contrôle de temps et l'heure locale, le temps d'utilisation de l'application qui correspond à l'identité de l'application ;
configurer différents états d'affichage écran en fonction de l'état de l'application ;
où le procédé comprend en outre l'étape suivante :
définir différents types d'applications sur différents écrans en fonction des états des applications.

2. Procédé de contrôle utilisé dans le terminal selon la revendication 1, dans lequel la réception, par le terminal, d'informations de contrôle de temps qui sont envoyées par l'appareil pour contrôler le terminal et qui correspondent à une identité d'application d'une application sur le terminal comprend l'étape suivante :
recevoir, par le terminal, les informations de contrôle de temps qui sont envoyées par l'appareil pour contrôler le terminal, où les informations de contrôle de temps comprennent des informations de temps d'utilisation de l'application sur le terminal ; et
le contrôle, par le terminal, en fonction des informations de temps d'utilisation de l'application et de l'heure locale, du temps d'utilisation de l'application comprend les étapes suivantes : configurer l'application dans un état disponible si l'heure locale se situe dans une plage horaire d'utilisation disponible pour l'application limitée par les informations de temps d'utilisation ou, sinon, configurer l'application dans un état désactivé.

3. Procédé de contrôle utilisé dans le terminal selon la revendication 2, dans lequel, avant le contrôle par le terminal en fonction des informations de temps d'utilisation de l'application et du temps local, du temps d'utilisation de l'application, le procédé comprend en outre l'étape suivante :
procéder à une synchronisation de temps avec un serveur de synchronisation de temps afin d'acquérir le temps local.

4. Procédé de contrôle utilisé dans le terminal selon la revendication 2 ou la revendication 3, dans lequel les informations de contrôle de temps reçues par le terminal comprennent en outre : des informations de temps d'accès des données auxquelles l'application accède ; et
après la réception, par le terminal, d'informations de contrôle de temps qui sont envoyées par l'appareil pour contrôler le terminal, le procédé comprend en outre les étapes suivantes :
contrôler, par le terminal, en fonction des informations de temps d'utilisation de l'application, des informations de temps d'accès des données et du temps local, le temps d'utilisation de l'application ; et le contrôle du temps d'utilisation de l'application comprend les étapes suivantes : configurer l'application dans l'état disponible si le temps local se situe à la fois dans la plage horaire disponible pour l'application limitée par les informations sur le temps d'utilisation de l'application et dans une plage horaire disponible des données limitée par les informations sur le temps d'accès des données ou, sinon, configurer l'application dans l'état désactivé.

5. Procédé de contrôle utilisé dans le terminal selon l'une quelconque des revendications 1 à 4, dans lequel, après avoir réception, par le terminal, d'informations de contrôle de temps qui sont envoyées par l'appareil pour contrôler le terminal, le procédé comprend en outre les étapes suivantes :
recevoir, par le terminal, des informations de limite d'accès d'adresse qui sont envoyées par l'appareil pour contrôler le terminal et qui correspondent à l'application, et contrôler une adresse d'accès en fonction des informations de limite d'accès d'adresse lorsque l'application est utilisée.

6. Procédé de contrôle utilisé dans le terminal selon l'une quelconque des revendications 1 à 5, dans lequel la configuration de différents états d'affichage écran en fonction des états des applications comprend en outre les étapes suivantes :
lorsque l'application est dans l'état disponible, un écran correspondant à l'application est configuré dans une couleur à luminance élevée ; ou
lorsque l'application est dans l'état désactivé, un écran correspondant à l'application est affiché en gris.

7. Terminal comprenant :
une unité d'envoi d'identité de terminal (1101), configurée pour envoyer une identité de terminal du terminal à un appareil pour contrôler le terminal, de manière à ce que l'appareil pour contrôler le terminal acquière, selon l'identité de terminal, des informations de contrôle de temps qui correspondent à une identité d'application d'une application sur le terminal ;
une unité de réception de temps d'application (1102), configurée pour recevoir les informations de contrôle de temps envoyées par l'appareil pour contrôler le terminal ; et
une unité de contrôle de temps d'application (1103), configurée pour contrôler, en fonction des informations de contrôle de temps et du temps local, le temps d'utilisation de l'application qui correspond à l'identité de l'application ;
où le terminal est configuré pour envoyer une demande de démarrage d'application à l'appareil pour demander le démarrage de l'application, où l'application est une application actuellement dans un état désactivé sur le terminal ; et recevoir une commande de démarrage utilisée pour indiquer le démarrage de l'application depuis l'appareil, et configurer l'application dans un état disponible selon la commande de démarrage ;
où le terminal comprend en outre un écran,
l'écran étant configuré pour afficher différents états d'écran en fonction de l'état de l'application ;
où différents types d'applications sont configurés sur différents écrans selon les états des applications, et l'écran est configuré pour afficher différents écrans selon les états des applications.

8. Terminal selon la revendication 7, dans lequel les informations de contrôle de temps comprennent des informations de temps d'utilisation de l'application sur le terminal ; et
l'unité de contrôle de temps d'application (1103) est spécifiquement configurée pour contrôler, en fonction des informations de temps d'utilisation de l'application et du temps local, le temps d'utilisation de l'application, ce qui comprend les étapes suivantes : configurer l'application dans un état disponible si le temps local se situe dans une plage horaire d'utilisation disponible pour l'application limitée par les informations de temps d'utilisation ou, sinon, configurer l'application dans un état désactivé.

9. Terminal selon la revendication 7 ou la revendication 8, dans lequel le terminal comprend en outre : une unité de synchronisation temporelle (1104), configurée pour procéder à une synchronisation de temps avec un serveur de synchronisation de temps afin d'acquérir le temps local.

10. Terminal selon la revendication 8 ou la revendication 9, dans lequel les informations de contrôle de temps comprennent en outre des informations de temps d'accès des données auxquelles l'application accède ; et
l'unité de contrôle de temps d'application (1103) est spécifiquement configurée pour contrôler, en fonction des informations de temps d'utilisation de l'application, des informations de temps d'accès des données et du temps local, le temps d'utilisation de l'application, ce qui comprend les étapes suivantes ; configurer l'application dans l'état disponible si le temps local se situe à la fois dans la plage horaire disponible pour l'application limitée par les informations sur le temps d'utilisation de l'application et dans une plage horaire disponible des données limitée par les informations sur le temps d'accès des données ou, sinon, configurer l'application dans l'état désactivé.

11. Terminal selon l'une quelconque des revendications 7 à 10, dans lequel le terminal comprend en outre :
une unité de contrôle d'adresse d'accès (1105), configurée pour recevoir des informations de limite d'accès d'adresse qui sont envoyées par l'appareil pour contrôler le terminal et qui correspondent à une application, et contrôler une adresse d'accès en fonction des informations de limite d'accès d'adresse lorsque l'application est utilisée.

12. Terminal selon l'une quelconque des revendications 7 à 10, dans lequel l'écran est configuré pour afficher un écran correspondant à l'application qui est configuré dans une couleur à luminance élevée lorsque l'application est dans l'état disponible ; ou
l'écran est configuré pour afficher un écran correspondant à l'application qui est configuré en gris lorsque l'application est dans l'état désactivé.

13. Appareil pour contrôler un terminal, comprenant :
une unité de réception d'identité de terminal (91), configurée pour recevoir une identité de terminal envoyée par un terminal ;
une unité d'acquisition de temps d'application (92), configurée pour acquérir, selon l'identité du terminal, des informations de contrôle de temps qui correspondent à une identité d'application d'une application sur le terminal ;
une unité d'envoi de temps d'application (93), configurée pour envoyer les informations de contrôle de temps au terminal, de manière à ce que le terminal contrôle le temps d'utilisation de l'application qui correspond à l'identité de l'application en fonction des informations de contrôle de temps ; et
une unité de traitement de commande spéciale (95), configurée pour recevoir une demande de démarrage d'application envoyée par le terminal pour demander le démarrage de l'application, où l'application est une application actuellement dans un état désactivé sur le terminal ; et envoyer une commande de démarrage utilisée pour indiquer le démarrage de l'application au terminal en fonction de la demande de démarrage de l'application, de manière à ce que le terminal configure l'application dans un état disponible en fonction de la commande de démarrage ;
où différents états d'affichage écran sont définis en fonction de l'état de l'application ;
où différents types d'applications sont configurés sur différents écrans selon les états des applications, et l'écran est configuré pour afficher différents écrans selon les états des applications.

14. Appareil pour contrôler le terminal selon la revendication 13, dans lequel : l'unité d'acquisition de temps d'application (92) est spécifiquement configurée pour acquérir, en fonction de l'identité du terminal, une identité d'application qui correspond à l'identité du terminal, où l'identité de l'application est une identité d'application d'une application sur le terminal ; et pour acquérir, en fonction de l'identité de l'application, les informations de contrôle de temps qui correspondent à l'identité de l'application.

15. Appareil pour contrôler le terminal selon la revendication 13 ou la revendication 14, dans lequel : l'unité de réception d'identité de terminal (91) est spécifiquement configurée pour recevoir une demande d'enregistrement d'application envoyée par le terminal, et la demande d'enregistrement d'application achemine une identité d'application d'une application sur le terminal et l'identité de terminal ; et
l'appareil comprend en outre : une unité de configuration d'informations de contrôle (94), configurée pour stocker une correspondance entre l'identité d'application et l'identité du terminal, et définir les informations de contrôle de temps qui correspondent à l'identité d'application, de manière à ce que l'unité d'acquisition de temps d'application acquière les informations de contrôle de temps en fonction de l'identité du terminal.

16. Appareil pour contrôler le terminal selon la revendication 15, dans lequel : l'unité de configuration d'informations de contrôle (94) est en outre configurée pour examiner l'application qui correspond à l'identité d'application reçue par l'unité de réception d'identité de terminal et, si l'application est une application de bureau à distance ou une application en nuage, ne plus définir les informations de contrôle de temps de l'application.
